# EUROPEAN PATENT APPLICATION

(11) **EP 4 227 182 A1**
(43) Date of publication of application: **16.08.2023**
(21) Application number: 22156569.0
(22) Date of filing: 14.02.2022
(51) Int. Cl.: B60W 60/00, B60W 50/00, G01C 21/36

(54) **METHOD FOR CONTROLLING A TRANSITION FROM AUTONOMOUS DRIVING OF A VEHICLE TO MANUAL DRIVING OF THE VEHICLE IN ROAD SEGMENTS OF A DRIVING ROUTE OF THE VEHICLE THAT ARE SUITABLE FOR THE TRANSITION, COMPUTER PROGRAM, COMPUTER READABLE MEDIUM, CONTROL UNIT, AND VEHICLE**

(71) Applicant: VOLVO TRUCK CORPORATION, 405 08 Göteborg (SE)
(72) Inventor: Quibriac, Yann, Lyon (FR); Ribero, Raphael, Millery (FR)
(74) Representative: Eisenführ Speiser

(57) **Abstract**

A method for controlling a transition from autonomous driving of a vehicle (1) to manual driving of the vehicle in road segments of a driving route of the vehicle that are suitable for the transition, the method is characterized by the steps of: determining a driving route (10) from a starting location (11) to a target location (12) represented by a driving route data set stored on a storage unit (4), determining a current position (20) of the vehicle in the determined driving route, wherein the current position of the vehicle is represented by a vehicle position date set stored on the storage unit, determining a current route condition of the determined driving route, wherein the current route condition is represented by a route condition data set stored on the storage unit, segmenting the determined driving route into road segments (30) by means of a computer system depending on the driving route data set and/or the vehicle position data set and/or the route condition data set, wherein each road segment is represented by a road segment data set stored on the storage unit, classifying each road segment ahead of the vehicle as transitioning segment or none-transitioning segment by means of the computer system, wherein a road segment that is classified as transitioning segment (31) is a road segment suitable for transitioning from autonomous driving of the vehicle to manual driving of the vehicle, and a road segment that is classified as none-transitioning segment (32) is a road segment not suitable for transitioning from autonomous driving of the vehicle to manual driving of the vehicle, wherein the road segment is classified depending on the road segment data, and controlling the transition from autonomous driving to manual driving depending on the classification of the classified road segments ahead of the vehicle.

## Description

### TECHNICAL FIELD

The invention relates to a method for controlling a transition from autonomous driving of a vehicle to manual driving of the vehicle in road segments of a driving route of the vehicle that are suitable for the transition. Further, the invention relates to a computer program, a computer readable medium, and a control unit for controlling a transition from autonomous driving of a vehicle to manual driving of the vehicle in road segments of a driving route of the vehicle that are classified suitable for the transition. Finally, the invention relates to a vehicle.

The invention can be applied to all kind of vehicles, such as cars, trucks or buses.

### BACKGROUND

EP 3 231 682 B1, DE 10 2018 210 226 A1 and US 2017 / 0236210 A1 each relate to a method/system that provides a handover notification when an "unsafe" autonomous road section is ahead indicating that autonomous driving should be switched to manual driving.

US 20190204827 relates to a system and method for providing information indicative of autonomous availability. The system is capable to automatically transition from autonomous mode to manual mode after notifying the driver ahead of the transition.

US 10,300,930 B2 proposes to identify an upcoming road section that is not suitable for semi-autonomous driving.

Thus, according to the prior art, vehicles in autonomous driving can ask the driver to take the control for any reasons. Consequently, the transition from autonomous driving to manual driving is only based on the vehicle status (autonomous driving or manual driving) and can happen in a potentially dangerous road sections. For example, road sections may be potentially dangerous for autonomous driving in case of bad weather, or an upcoming curve or round about. It could even end up with a stop of the vehicle in a very dangerous location, such as a tunnel or a curve of a road that cannot be overlooked if the driver is not reactive enough.

### SUMMARY

Thus, an object of the invention is to provide information on road sections of a driving route of a vehicle that are a most suitable for transitioning from autonomous driving to manual driving. In particular, an object of the invention is to support the decision transitioning from autonomous driving to manual driving on the most suitable road sections of the driving route for transitioning.

According to a first aspect of the invention, the object is achieved by a method according to claim 1. In particular, the object is achieved by a method for controlling a transition from autonomous driving of a vehicle to manual driving of the vehicle in road segments of a driving route of the vehicle that are suitable for the transition.

The method according to the invention comprises several steps.

The method comprises the step of determining a driving route from a starting location to a target location represented by a driving route data set stored on a storage unit.

Further, the method comprises the step of determining a current position of the vehicle in the determined driving route, wherein the current position of the vehicle is represented by a vehicle position date set stored on the storage unit.

In addition, the method comprises the step of determining a current route condition of the determined driving route, wherein the current route condition is represented by a route condition data set stored on the storage unit.

Subsequently, the method comprises the step of segmenting the determined driving route into road segments by means of a computer system depending on the driving route data set and/or the vehicle position data set and/or the route condition data set, wherein each road segment is represented by a road segment data set stored on the storage unit. Preferably, the computer system is a control unit described herein below.

Next, the method comprises the step of classifying each road segment ahead of the vehicle as transitioning segment or none-transitioning segment by means of the computer system. Thereby, a road segment that is classified as transitioning segment is a road segment suitable for transitioning from autonomous driving of the vehicle to manual driving of the vehicle. A road segment that is classified as none-transitioning segment is a road segment not suitable for transitioning from autonomous driving of the vehicle to manual driving of the vehicle. The road segment is classified depending on the road segment data.

Depending on the classification of the classified road segments ahead of the vehicle the transition from autonomous driving to manual driving is controlled.

The invention has the effect to determine the most suitable road sections of the driving route of the vehicle for handling the transition from autonomous driving to manual driving based on the perception of the coming road sections and its attributes of the driving route. Attributes of the driving route are for example curves, roundabouts, traffic lights, traffic jams, accidents, pay tools, resting area, etc.. In particular, the invention allows to manage the transition from autonomous driving to manual driving in the safest location by anticipating or postponing the transition. The invention supports the driver in the decision for the best moment to give back the manual control.

According to a preferred embodiment of the method, the driving route data set comprises one of or all of the following data:
- route position data representing the position of the driving route; and/or
- representing a straight road section that is located before or after a road section with curves; and/or
- representing a wide road section that is located before or after a narrow road section that is narrower than the wide road section; and/or
- representing a flat road section that is located before or after a steep road section that is steeper than the flat road section; and/or
- representing a straight road section that located before or after a road section with a roundabout and/or crossover.

Further, in an embodiment of the method it is preferred that the route condition data set comprises one of or all of the following data:
- road condition data representing a road condition of the determined driving route, and/or
- traffic data representing traffic on the determined driving route, and/or
- weather data representing weather along the determined driving route, and/or
- traffic sign and traffic light data representing traffic signs and traffic lights located along the determined driving route, and/or
- third vehicle data representing information of another vehicle regarding a location and/or a reason for its transitioning from autonomous driving to manual driving at a certain road section.

The road condition data comprises data representing a none-slippery road section that is located before or after a slippery road section. Additionally or alternatively, the road condition data comprises data representing a free road section that is located before or after a road section having an obstacle.

The traffic data comprises data representing a road section with less traffic that is located be-fore or after a road section with more traffic than the road section with less traffic. Additionally or alternatively, the traffic data comprises data representing a location of an accident on the driving route. Further, additionally or alternatively, the traffic data comprises data representing a location of a stopped vehicle on the driving route.

The weather data comprises data representing a road section with no or less precipitation that is located before or after a road section with more precipitation than the road section with no or less precipitation.

The traffic sign and traffic light data comprises data representing a road section where the vehicle has to stop due to a traffic sign and/or a red traffic light

The third vehicle data represents information of another vehicle regarding a location and/or a reason for its transitioning from autonomous driving to manual driving at a certain road section.

Driving route data comprising all this kind of data allows to identify the most suitable road segments that are suitable for transitioning from autonomous driving to manual driving.

In another preferred embodiment of the method, the road segment data set comprises driving route data and/or route condition data associated with the respective road segment.

Further according to a preferred embodiment of the method, a road segment is classified as transitioning segment if
- the road segment is a straight road segment that is located before or after road segment with curves; and/or
- the road segment is a wide road segment that is located before or after a narrow road segment that is narrower than the wide road segment; and/or
- the road segment is a flat road segment that is located before or after a steep road segment that is flatter than the steep road segment; and/or
- the road segment is a road segment with less traffic that is located be-fore or after a road segment with more traffic than the traffic on the road segment with less traffic; and /or
- the road segment is a road segment that is located before a road segment with a stopped vehicle; and/or
- the road segment is a road segment that is located before a road segment with an accident; and/or
- the road segment is a road segment where another vehicle has transitioned from autonomous driving to manual driving; and/or
- the road segment is a road segment that is located before a road segment with stormy or snowy condition limiting autonomous devices perception; and/or
- the road segment is a road segment that is located before a road segment with a crossover and/or roundabout; and/or
- the road segment is a road segment that is located before a road segment with a traffic jam; and/or
- the road segment is a road segment comprising a resting area; and/or
- the road segment is a road segment that is located before a road segment with a pay tool; and/or
- the road segment is a road segment that is located before a road segment with a closed rail road crossing; and/or
- the road segment is a road segment that is located before a road segment with a traffic sign and/or a traffic light indicating the vehicle to stop.

Depending on whether a road segment on the driving route is classified as transitioning segment, the transitioning from autonomous driving to manual driving can be anticipated and/or postponed accordingly.

In another preferred embodiment the method comprises the step of communicating with a third vehicle and/or a computer system arranged spaced apart from the vehicle. Preferably the computer system is a cloud system, arranged spaced apart from the vehicle. The computer system is configured for determining at least part of the current route condition of the determined driving route. Additionally or alternatively, the computer system is configured for determining at least part of the classification of some of the road segments of the driving route.

According to a further preferred embodiment of the method, the step of determining a driving route and/or the step of determining a current position of the vehicle and/or the step of determining a current route condition of the determined driving route and/or the step of segmenting the determined driving route into road segments and/or the step of classifying each road segment ahead of the vehicle as transitioning segment or none-transitioning segment are executed periodically, in particular continuously, while the vehicle is moving along the driving route from the starting location to the target location.

In a further embodiment of the method, it is preferred that the current position of the vehicle is determined by means of a Global Navigation Satellite System.

According to a further aspect of the invention, the method is achieved by a computer program according to claim 9. The computer program comprises program code means for performing the steps of the aspect and embodiments of the method described herein when said program is run on a computer.

As to the advantages, preferred embodiments and details of the computer program, reference is made to the corresponding aspect and embodiments of the method described above.

According to a further aspect of the invention, the object is achieve by a computer readable according to claim 10. The computer readable medium carries a computer program comprising program code means for performing the steps of the aspect and embodiments of the method described herein when said program product is run on a computer.

As to the advantages, preferred embodiments and details of the computer readable medium, reference is made to the corresponding aspect and embodiments of the method described above.

According to a further aspect of the invention, the object is achieved by a control unit according to claim 11. The control unit for controlling a transition from autonomous driving of a vehicle to manual driving of the vehicle in road segments of a driving route of the vehicle that are classified suitable for the transition, wherein the control unit is configured to perform the steps of the aspect and embodiments of the method described herein. Preferably, the control unit is a computer system described herein.

As to the advantages, preferred embodiments and details of the control unit, reference is made to the corresponding aspect and embodiments of the method described above.

According to a preferred embodiment, the control unit comprises a storage unit for storing data sets.

According to a further preferred embodiment, the control unit comprises a communication unit for communicating with a third vehicle and/or a computer system arranged spaced apart from the vehicle. Preferably the computer system is a cloud system, arranged spaced apart from the vehicle. The computer system is configured for determining at least part of the current route condition of the determined driving route. Additionally or alternatively, the computer system is configured for determining at least part of the classification of some of the road segments of the driving route.

According to a further aspect of the invention, the object is achieved by a vehicle according to claim 14. The vehicle comprises a control unit according to the aspect and embodiments of the control unit herein.

As to the advantages, preferred embodiments and details of vehicle, reference is made to the corresponding aspects and embodiments of the method described above.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
- Fig. 1: is a schematic block diagram depicting steps in an example embodiment of a method for controlling a transition from autonomous driving of a vehicle to manual driving of the vehicle in road segments of a driving route of the vehicle that are suitable for the transition,
- Fig. 2: is a schematic block diagram depicting steps in a further example embodiment of a method for controlling a transition from autonomous driving of a vehicle to manual driving of the vehicle in road segments of a driving route of the vehicle that are suitable for the transition,
- Fig. 3: is a schematic view of an example embodiment of a vehicle, and
- Fig. 4: is a schematic drawing of a display visualizing a segmented determined driving route by means of a computer system depending on a driving route data set and the vehicle position data set and a route condition data set.

### DETAILED DESCRIPTION OF EXAMPLE EMBODIMENTS OF THE INVENTION

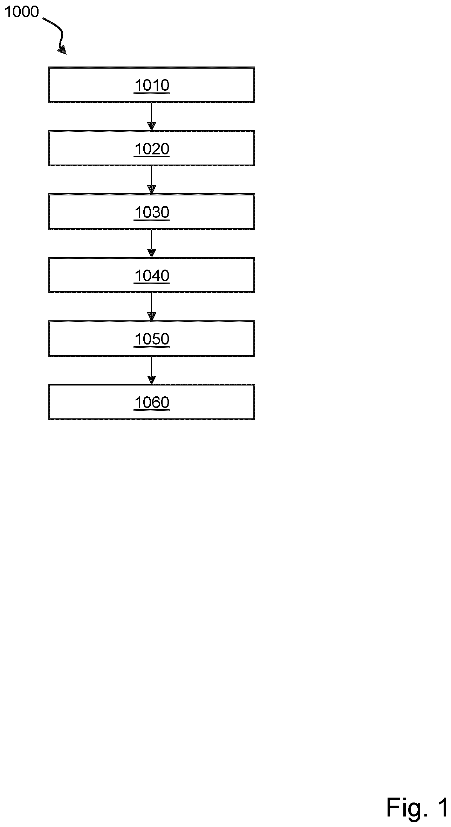

Fig. 1 is a schematic block diagram depicting steps in a preferred example embodiment of a method 1000 for controlling a transition from autonomous driving of a vehicle to manual driving of the vehicle in road segments of a driving route of the vehicle that are suitable for the transition.

According to this embodiment, the method 1000 comprises several steps.

In a first step 1010, the method 1000 requires to determine a driving route from a starting location to a target location represented by a driving route data set stored on a storage unit.

In this preferred embodiment of the method, the driving route data set comprises several kinds of data. For one, the driving route data set comprises route position data representing the position of the driving route. Further, the driving route data set comprises data that represent road sections. For example, the driving route data set comprises data representing a straight road section that is located before or after a road section with curves and/or a roundabout and/or crossover. The driving route data set may also comprise data representing a wide road section that is located before or after a narrow road section that is narrower than the wide road section. Finally, the driving route data set may comprise data representing a flat road section that is located before or after a steep road section that is steeper than the flat road section.

In a second step 1020, a current position of the vehicle in the determined driving route is determined. Thereby, the current position of the vehicle is represented by a vehicle position date set that is stored on the storage unit. The current position of the vehicle 1 is determined by means of a Global Navigation Satellite System 8.

Furthermore, the method 1000 comprises the step 1030 of determining a current route condition of the determined driving route. The current route condition is represented by a route condition data set that is stored on the storage unit.

The route condition data comprises as well different kinds of data. The route condition data is distinguished between road condition data, traffic data, weather data, traffic sign and traffic light data, and third vehicle data.

The road condition data represents a road condition of the determined driving route. For example, the road condition data comprises data such that represents a none-slippery road section that is located before or after a slippery road section. The road condition data may also comprise data that represents a free road section that is located before or after a road section having an obstacle.

The traffic data represents traffic on the determined driving route. Thus, the traffic data may comprise data representing a road section with less traffic that is located before or after a road section with more traffic than the road section with less traffic. Also, the traffic data can comprise data representing a location of an accident on the driving route or a location of a stopped vehicle on the driving route.

Weather data is understood as data representing weather along the determined driving route. The weather data may comprise data representing a road section with no or less precipitation that is located before or after a road section with more precipitation than the road section with no or less precipitation.

Traffic sign and traffic light data represents traffic signs and traffic lights located along the determined driving route. The traffic sign and traffic light data may for example comprise data that represents a road section where the vehicle has to stop due to a traffic sign and/or a red traffic light.

Finally, the third vehicle data represents information of another vehicle regarding a location and/or a reason for its transitioning from autonomous driving to manual driving at a certain road section.

In a subsequent step 1040 of the method 1000, the determined driving route is segmented into road segments by means of a computer system depending on the driving route data set and the vehicle position data set and the route condition data set. Thereby, each road segment is represented by a road segment data set stored on the storage unit. The road segment data set comprises driving route data and route condition data associated with the respective road segment

Further, the method 1000 comprises the step 1050 of classifying each road segment ahead of the vehicle as transitioning segment or none-transitioning segment by means of the computer system. A road segment is classified as transitioning segment if a road segment is suitable for transitioning from autonomous driving of the vehicle to manual driving of the vehicle. Additionally, a road segment is classified as none-transitioning segment if a road segment is not suitable for transitioning from autonomous driving of the vehicle to manual driving of the vehicle. The road segment is classified depending on the road segment data.

According to this preferred embodiment, a road segment may be classified as transitioning segment if
- the road segment is a straight road segment that is located before or after road segment with curves; and/or
- the road segment is a wide road segment that is located before or after a narrow road segment that is narrower than the wide road segment; and/or
- the road segment is a flat road segment that is located before or after a steep road segment that is flatter than the steep road segment; and/or
- the road segment is a road segment with less traffic that is located before or after a road segment with more traffic than the traffic on the road segment with less traffic; and /or
- the road segment is a road segment that is located before a road segment with a stopped vehicle; and/or
- the road segment is a road segment that is located before a road segment with an accident; and/or
- the road segment is a road segment where another vehicle has transitioned from autonomous driving to manual driving; and/or
- the road segment is a road segment that is located before a road segment with stormy or snowy condition limiting autonomous devices perception; and/or
- the road segment is a road segment that is located before a road segment with a crossover and/or roundabout; and/or
- the road segment is a road segment that is located before a road segment with a traffic jam; and/or
- the road segment is a road segment comprising a resting area; and/or
- the road segment is a road segment that is located before a road segment with a pay tool; and/or
- the road segment is a road segment that is located before a road segment with a closed rail road crossing; and/or
- the road segment is a road segment that is located before a road segment with a traffic sign and/or a traffic light indicating the vehicle to stop.

Finally, in a further step 1060 of the method 1000, the transition from autonomous driving to manual driving is controlled depending on the classification of the classified road segments ahead of the vehicle.

In this preferred embodiment of the method, the step 1010 of determining a driving route 10, the step 1020 of determining a current position 11 of the vehicle 1, the step 1030 of determining a current route condition of the determined driving route 10, the step 1040 of segmenting the determined driving route into road segments 30, and the step of classifying each road segment 30 ahead of the vehicle 1 as transitioning segment 31 or none-transitioning segment 32 are executed periodically, while the vehicle 1 is moving along the driving route 10 from the starting location 11 to the target location 12.

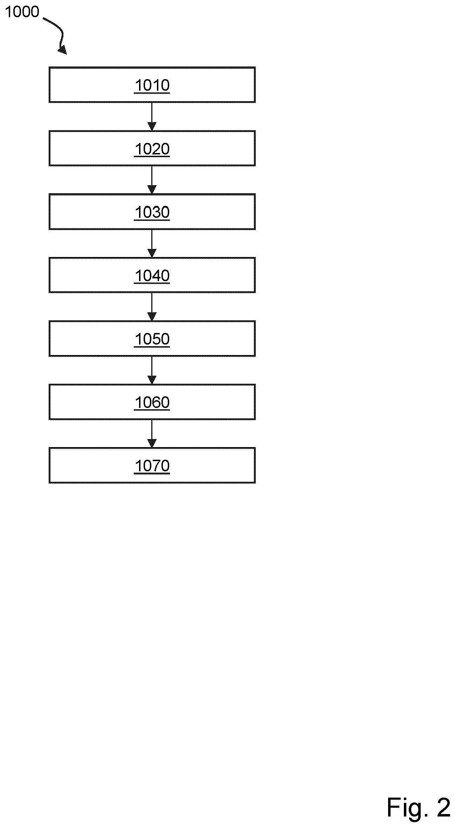

Fig. 2 is a schematic block diagram depicting steps in a further preferred example embodiment of a method 1000 for controlling a transition from autonomous driving of a vehicle to manual driving of the vehicle in road segments of a driving route of the vehicle that are suitable for the transition. The example embodiment of the method 1000 depicted in Fig 2 is based on the example embodiment of the method 1000 depicted in Fig. 1 and described above. The example embodiment of the method shown in Fig. 2 comprises the additional step 1070 of communicating with a third vehicle and/or a computer system arranged spaced apart from the vehicle. In this preferred embodiment, the computer system is a cloud system, arranged spaced apart from the vehicle. The computer system is configured for determining the current route condition of the determined driving route and the classification of some of the road segments of the driving route.

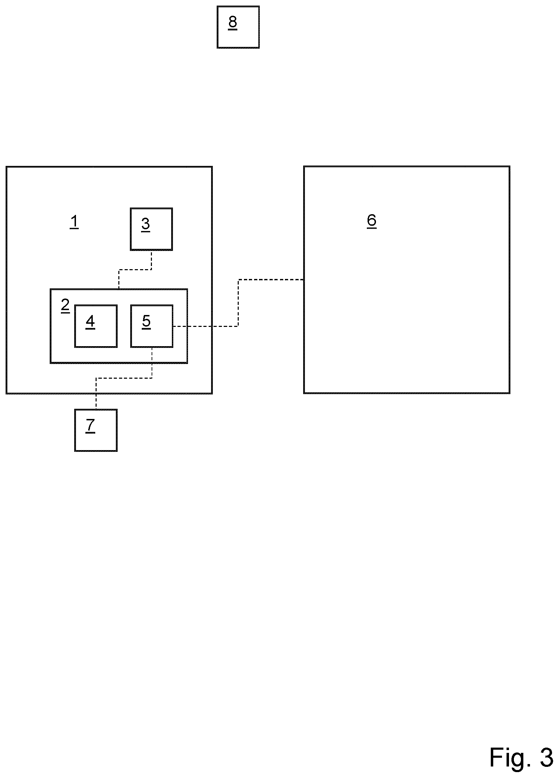

Fig. 3 is a schematic view of an example embodiment of a vehicle 1 comprising a control unit 2. The control unit 2 is configured for controlling a transition from autonomous driving of the vehicle 1 to manual driving of the vehicle 1 in road segments of a driving route 10 of the vehicle 1 that are classified suitable for the transition (transitioning segment 31) or that are classified not suitable for the transition (none-transitioning segment 32). The control unit 2 is configured to perform the steps of the example embodiments of the method described above with regard to Fig. 1 and Fig. 2.

The control unit 2 comprises a storage unit 4 for storing the different data sets described above. Further, the control unit 2 comprises a communication unit 5 for wireless communicating with another vehicle 6 and a cloud system 7, arranged spaced apart from the vehicle 1. By means of the cloud system the current route condition of the determined driving route 10 and the classification of some of the road segments 30 of the driving route can be determined.

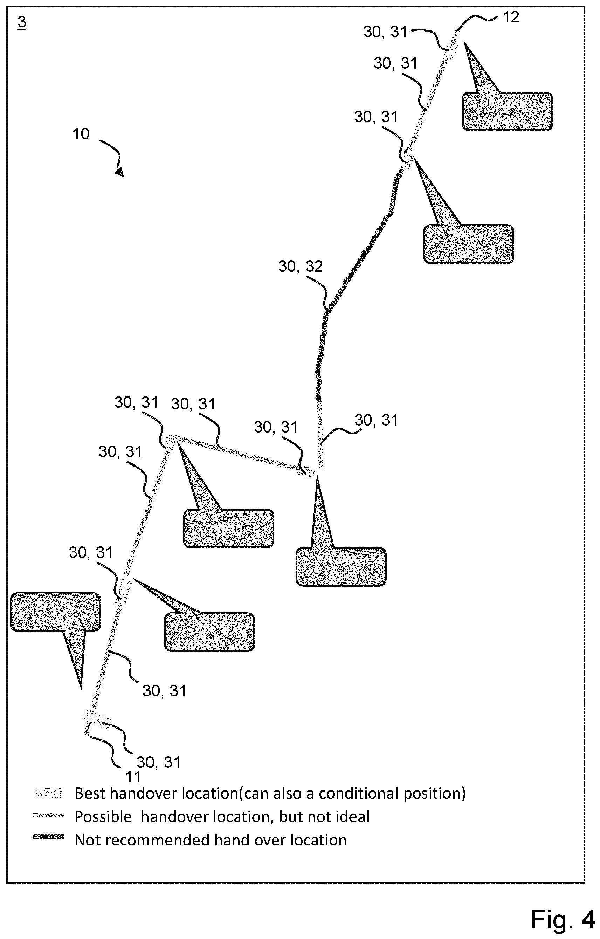

Fig. 4 is a schematic drawing of a segmented driving route 10 determined by means of a computer system and visualized on a display 3, for example on a display 3 of the vehicle 1 described above. The driving route 10 was determined and segmented depending on a driving route data set and the vehicle position data set and a route condition data set, for example based on the steps of the example embodiments of the method described above with regard to Fig. 1 and Fig. 2.

## Claims

1. A method (1000) for controlling a transition from autonomous driving of a vehicle (1) to manual driving of the vehicle (1) in road segments of a driving route of the vehicle that are suitable for the transition,
the method (1000) is **characterized by** the steps of:
- determining (1010) a driving route (10) from a starting location (11) to a target location (12) represented by a driving route data set stored on a storage unit (4),
- determining a current position (20) of the vehicle (1) in the determined driving route (1020), wherein the current position (20) of the vehicle (1) is represented by a vehicle position date set stored on the storage unit,
- determining a current route condition of the determined driving route (1030), wherein the current route condition is represented by a route condition data set stored on the storage unit (4),
- segmenting the determined driving route into road segments (30) by means of a computer system depending on the driving route data set and/or the vehicle position data set and/or the route condition data set (1040), wherein each road segment is represented by a road segment data set stored on the storage unit (4),
- classifying each road segment (30) ahead of the vehicle as transitioning segment (31) or none-transitioning segment (32) by means of the computer system (1050),
∘ wherein
▪ a road segment (30) that is classified as transitioning segment (31) is a road segment suitable for transitioning from autonomous driving of the vehicle to manual driving of the vehicle, and
▪ a road segment (30) that is classified as none-transitioning segment (32) is a road segment not suitable for transitioning from autonomous driving of the vehicle to manual driving of the vehicle,
∘ wherein the road segment (30) is classified depending on the road segment data, and
- controlling the transition from autonomous driving to manual driving depending on the classification of the classified road segments ahead of the vehicle (1060).

2. A method (1000) according to preceding claim 1, wherein the driving route data set comprises one of or all of the following data:
- route position data representing the position of the driving route; and/or
- representing a straight road section that is located before or after a road section with curves; and/or
- representing a wide road section that is located before or after a narrow road section that is narrower than the wide road section; and/or
- representing a flat road section that is located before or after a steep road section that is steeper than the flat road section; and/or
- representing a straight road section that located before or after a road section with a roundabout and/or crossover.

3. A method according to any of the preceding claims 1 or 2, wherein the route condition data set comprises one of or all of the following data:
- road condition data representing a road condition of the determined driving route, wherein the road condition data comprises data
∘ representing a none-slippery road section that is located before or after a slippery road section; and/or
∘ representing a free road section that is located before or after a road section having an obstacle; and/or
- traffic data representing traffic on the determined driving route; wherein the traffic data comprises data
∘ representing a road section with less traffic that is located before or after a road section with more traffic than the road section with less traffic; and/or
∘ representing a location of an accident on the driving route; and/or
∘ representing a location of a stopped vehicle on the driving route; and/or
- weather data representing weather along the determined driving route, wherein the weather data comprises data
∘ representing a road section with no or less precipitation that is located before or after a road section with more precipitation than the road section with no or less precipitation; and/or
- traffic sign and traffic light data representing traffic signs and traffic lights located along the determined driving route, wherein traffic sign and traffic light data comprises data
∘ representing a road section where the vehicle has to stop due to a traffic sign and/or a red traffic light; and/or
- third vehicle data representing information of another vehicle regarding a location and/or a reason for its transitioning from autonomous driving to manual driving at a certain road section.

4. A method according to any of the preceding claims 1 to 3, wherein the road segment data set comprises driving route data and/or route condition data associated with the respective road segment.

5. A method according to any of the preceding claims 1 to 4, wherein a road segment is classified as transitioning segment if
- the road segment is a straight road segment that is located before or after road segment with curves; and/or
- the road segment is a wide road segment that is located before or after a narrow road segment that is narrower than the wide road segment; and/or
- the road segment is a flat road segment that is located before or after a steep road segment that is flatter than the steep road segment; and/or
- the road segment is a road segment with less traffic that is located before or after a road segment with more traffic than the traffic on the road segment with less traffic; and /or
- the road segment is a road segment that is located before a road segment with a stopped vehicle; and/or
- the road segment is a road segment that is located before a road segment with an accident; and/or
- the road segment is a road segment where another vehicle has transitioned from autonomous driving to manual driving; and/or
- the road segment is a road segment that is located before a road segment with stormy or snowy condition limiting autonomous devices perception; and/or
- the road segment is a road segment that is located before a road segment with a crossover and/or roundabout; and/or
- the road segment is a road segment that is located before a road segment with a traffic jam; and/or
- the road segment is a road segment comprising a resting area; and/or
- the road segment is a road segment that is located before a road segment with a pay tool; and/or
- the road segment is a road segment that is located before a road segment with a closed rail road crossing; and/or
- the road segment is a road segment that is located before a road segment with a traffic sign and/or a traffic light indicating the vehicle to stop.

6. A method according to any of the preceding claims 1 to 5, comprising the step of communicating (1070) with another vehicle (6) and/or a computer system (7), wherein preferably the computer system is a cloud system, arranged spaced apart from the vehicle, configured for determining
- at least part of the current route condition of the determined driving route; and/or
- at least part of the classification of some of the road segments of the driving route.

7. A method according to any of the preceding claims 1 to 6, wherein the step of determining a driving route (1010) and/or the step of determining a current position of the vehicle (1020) and/or the step of determining a current route condition of the determined driving route (1030) and/or the step of segmenting the determined driving route into road segments (1040) and/or the step of classifying each road segment ahead of the vehicle as transitioning segment or none-transitioning segment (1050) are executed periodically, in particular continuously, while the vehicle is moving along the driving route from the starting location to the target location.

8. A method according to any of the preceding claims 1 to 8, wherein the current position of the vehicle is determined by means of a Global Navigation Satellite System (8).

9. A computer program comprising program code means for performing the steps of any one of the preceding of claims 1 to 8 when said program is run on a computer.

10. A computer readable medium carrying a computer program comprising program code means for performing the steps of any one of the preceding of claims 1 to 8 when said program product is run on a computer.

11. A control unit (2) for controlling a transition from autonomous driving of a vehicle to manual driving of the vehicle in road segments of a driving route of the vehicle that are classified suitable for the transition, wherein the control unit is configured to perform the steps of any one of the preceding of claims 1 to 8.

12. A control unit (2) according to the preceding claim 11, comprising a storage unit for storing data sets.

13. A control unit (2) according to any of the preceding claims 11 or 12, comprising a communication unit for communicating with another vehicle (6) and/or a computer system (7), wherein preferably the computer system is a cloud system, arranged spaced apart from the vehicle, configured for determining
- at least part of the current route condition of the determined driving route; and/or
- at least part of the classification of some of the road segments of the driving route.

14. A vehicle (1) comprising a control unit (2) according to any of the preceding claims 11 to 13.
